# EUROPEAN PATENT APPLICATION

(11) **EP 4 369 503 A1**
(43) Date of publication of application: **15.05.2024**
(21) Application number: 23819969.9
(22) Date of filing: 31.03.2023
(51) Int. Cl.: H01M 50/403, H01M 50/42, H01M 50/426, H01M 50/431, H01M 50/443, H01M 10/0525

(54) **METHOD FOR MANUFACTURING SEPARATOR FOR LITHIUM SECONDARY BATTERY, SEPARATOR FOR LITHIUM SECONDARY BATTERY MANUFACTURED THEREBY, AND METHOD FOR MANUFACTURING LITHIUM SECONDARY BATTERY USING SAME**

(30) Priority: 07.06.2022 KR 20220068744; 29.03.2023 KR 20230041162
(71) Applicant: LG Energy Solution, Ltd., Seoul 07335 (KR)
(72) Inventor: BAE, Won Sik, Daejeon 34122 (KR); JEONG, So Mi, Daejeon 34122 (KR); LEE, So Yeong, Daejeon 34122 (KR); PARK, So Jung, Daejeon 34122 (KR); KIM, Kyung Tae, Daejeon 34122 (KR)
(74) Representative: Hoffmann Eitle
(86) International application number: PCT/KR2023/004390
(87) International publication number: WO 2023/239031

(57) **Abstract**

A method of manufacturing a separator for a lithium secondary battery having improved compression resistance is provided. According to one aspect of the present disclosure, there is provided a method of manufacturing a separator for a lithium secondary battery, the method including: (S11) coating a polymer solution having a form in which a first polymer soluble to an electrolyte is dissolved in a solvent to an electrolyte to at least one surface of a porous polymer substrate having a plurality of pores, thereby impregnating the pores of the porous polymer substrate with the polymer solution; and (S12) coating and drying a slurry containing a second polymer non-soluble to the electrolyte, on the coated polymer solution.

## Description

### Technical Field

The present disclosure claims the benefit of the filing date of Korean Patent Application No. 10-2022-0068744 filed with the Korean Patent Office on June 7, 2022, the entire contents of which are incorporated herein by reference.

The present disclosure relates to a method of manufacturing a separator for a lithium secondary battery, a lithium secondary battery separator manufactured thereby, and a method of manufacturing a lithium secondary battery using the same separator.

### Background Art

As a separator for a lithium secondary battery, a porous substrate having multiple pores and being based on a polymer such as polyolefin is used. To improve adhesion between a porous polymer substrate and an electrode or to improve heat resistance of the porous polymer substrate, a separator has been developed, the separator being composed of a porous polymer substrate and a polymer layer or a polymer-containing coating layer formed on at least one surface of the porous polymer substrate, in which the polymer-containing coating layer is made of a mixture of polymer and organic particles.

Typically, an electrode assembly is manufactured through a lamination process in which a separator and an electrode are bonded by application of heat and pressure. The higher the heat and pressure applied to the separator, the higher the bonding force between the electrode and the separator.

Recently, for the purpose of improving productivity, processing speed is increased. This results in reduction in time for application of heat to the separator. In this condition, to secure adhesion of the separator, the application pressure is increased, However there is a concern that the increase of the application pressure causes the pores of the separator to be reduced in size or to be closed.

### Disclosure

### Technical Problem

An objective of the present disclosure is to provide a method of manufacturing a separator for a lithium secondary battery, the separator being capable of alleviating a deformation phenomenon in which pores of a porous polymer substrate are reduced in size or closed due to high application pressure during a lamination process in which an electrode is bonded to the separator including the porous polymer substrate and a polymer-containing coating layer disposed on at least one surface of the porous polymer substrate. The present disclosure also provides a method of manufacturing a lithium secondary battery using the same.

Another objective of the present disclosure is to provide a separator for a lithium secondary battery, the separator having the characteristics described above.

It will be readily apparent that the objectives and advantages of the present disclosure can be achieved by means or methods and combinations thereof recited in the claims.

### Technical Solution

A first aspect of the present disclosure provides a method of manufacturing a separator for a lithium secondary battery, the method comprising:
(S11) coating a polymer solution prepared by dissolving a first polymer soluble to an electrolyte in a solvent to at least one surface of a porous polymer substrate having a plurality of pores, thereby impregnating the pores of the porous polymer substrate with the polymer solution; and
(S12) coating and drying a slurry containing a second polymer non-soluble to the electrolyte, on the coated polymer solution.

According to a second aspect of the present disclosure, in the method of the first aspect,
the method further includes drying the coated polymer solution according to Step S11 before the coating the slurry according to Step S12.

According to a third aspect of the present disclosure, in the method of the first or second aspect,
the first polymer includes one or more types selected from the group consisting of polyacrylonitrile (PAN), polylactic acid (PLA), and polyacrylic acid (PAA).

According to a fourth aspect of the present disclosure, in the method of any one of the first to third aspects,
the first polymer in the polymer solution has a concentration of 5% to 70% by weight.

According to a fifth aspect of the present disclosure, in the method of any one of the first to fourth aspects,
the second polymer includes one or more types selected from the group consisting of a PVDF-HFP copolymer, a PVDF-CTFE copolymer, a PVDF-HFP-CTFE terpolymer, and a cyanoethyl polyvinyl alcohol.

According to a sixth aspect of the present disclosure, in the method of any one of the first to fifth aspects,
the slurry further includes inorganic particles.

A seventh aspect of the present disclosure provides a separator for a lithium secondary battery, the separator including:
a porous polymer substrate having a plurality of closed pores in which the first polymer soluble to the electrolyte is contained; and
an outer coating layer disposed on at least one surface of the porous polymer substrate and including the second polymer non-soluble to the electrolyte.

According to an eighth aspect of the present disclosure, in the separator of the seventh aspects,
the separator further includes a coating layer disposed between the porous polymer substrate and the outer coating layer, in which the coating layer includes the first polymer.

A ninth aspect of the present disclosure provides a separator for a lithium secondary battery, the separator including:
a porous polymer substrate having a plurality of pores;
a first polymer coating layer disposed in the pores such that the pores of the porous polymer substrate are closed, the first polymer being soluble to an electrolyte; and
an outer coating layer disposed on an upper surface of the first polymer coating layer and including a second polymer non-soluble to the electrolyte.

According to a tenth aspect of the present disclosure, in the separator of any one of the seventh to ninth aspects,
the first polymer includes one or more types selected from the group consisting of polyacrylonitrile (PAN), polylactic acid (PLA), and polyacrylic acid (PAA).

According to an eleventh aspect of the present disclosure, in the separator of any one of the seventh to tenth aspects,
the second polymer includes one or more types selected from the group consisting of a PVDF-HFP copolymer, a PVDF-CTFE copolymer, a PVDF-HFP-CTFE terpolymer, and a cyanoethyl polyvinyl alcohol.

According to a twelfth aspect of the present disclosure, in the separator of any one of the seventh to eleventh aspects,
the outer coating layer further include inorganic particles.

According to a thirteenth aspect of the present disclosure, in the separator of any one of the seventh to twelfth aspects,
the content ratio of the inorganic particles and the second polymer in the outer coating layer is in a range of 50:50 to 99:1.

A fourteenth aspect of the present disclosure provides a method of manufacturing a lithium secondary battery, the method including:
(S21) preparing an electrode assembly by laminating the separator according to any one of the seventh to thirteenth aspects with a cathode and an anode; and
(S22) opening the closed pores of the porous polymer substrate by dissolving the first polymer, by injecting an electrolyte after loading the laminated electrode assembly into a battery case.

### Advantageous Effects

In a method of manufacturing a separator including a polymer-containing coating layer formed on at least one surface of a porous polymer substrate, a polymer solution containing a first polymer soluble to an electrolyte is coated to at least one surface of the porous polymer substrate so that the polymer solution can be impregnated into the pores of the porous polymer substrate, and then a slurry containing a second polymer non-soluble to the electrolyte is coated and dried.

By the manufacturing process, the pores of the porous polymer substrate are closed because the first polymer is present in the pores due to the coating layer of the first polymer, so even though high pressure is applied during the electrode lamination process, due to the first polymer present in the pores, the deformation phenomenon in which the pores are reduced in size or closed is alleviated.

After the manufactured electrode assembly is loaded into a battery case, an electrolyte is injected to manufacture a secondary battery and the first polymer, which is located in the pores of the porous polymer substrate and thus closes the pores, is eluted by the electrolyte, and thus the closed pores are opened, thereby the recovering lithium ions passage function.

### Description of Drawings

The accompanying drawings illustrate preferred embodiments of the present disclosure, and illustrate the principles of the present disclosure in conjunction with a detailed description given below, but the scope of the present disclosure is not limited thereto. Furthermore, the shapes, sizes, scales, or proportions of elements illustrated in the accompanying drawings may be exaggerated to emphasize clarity.

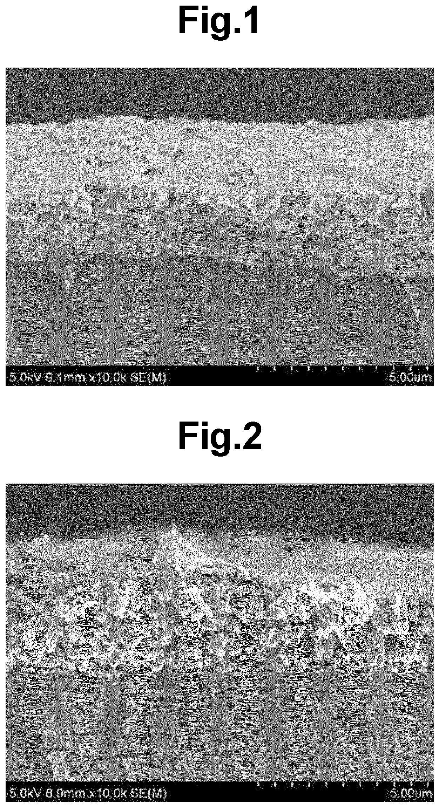

FIG. 1 is an SEM image of a surface of a separator of Example 1; and
FIG. 2 is an SEM image of a surface of a separator of Comparative Example 1.

### Best Mode

Hereinafter, the present disclosure will be described. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe its invention in the best way possible. The exemplary embodiments described herein and the configurations illustrated in the drawings are presented for illustrative purposes and do not exhaustively represent the technical spirit of the present disclosure. Accordingly, it should be appreciated that there will be various equivalents and modifications that can replace the exemplary embodiments and the configurations at the time at which the present application is filed.

It will be further understood that the terms "comprise", "include", or "has", when used in this specification, specify the presence of an element, but do not preclude the presence or addition of one or more other elements unless the context clearly indicates otherwise.

The characteristic "having pores" herein means that a gas-phase and/or liquid-phase fluid is passable from one side to the other side of an object through pores formed in the object and through a structure connecting the pores.

In the present specification, the separator has a porous property having multiple pores, and the separator serves as a porous ion-conducting barrier that prevents an anode and a cathode from being electrically connected and allows transmission of ions, in a lithium secondary battery.

Hereinafter, a method of manufacturing a separator for a lithium secondary battery, according to one embodiment of the present disclosure, will be described in detail.

The method according to one embodiment of the present disclosure includes:
(S11) coating a polymer solution prepared by dissolving a first polymer soluble to an electrolyte in a solvent to at least one surface of a porous polymer substrate having numerous pores, thereby impregnating the pores of the porous polymer substrate with the polymer solution ; and
(S12) coating and drying a slurry containing a second polymer non-soluble to the electrolyte, on the polymer solution.

Step S11 of coating a polymer solution prepared by dissolving a first polymer soluble to an electrolyte in a solvent to at least one surface of a porous polymer substrate having numerous pores, thereby impregnating the pores of the porous polymer substrate with the polymer solution will be described first.

In the present disclosure, the porous polymer substrate may be made of known polymers that can be used as porous polymer substrates for lithium secondary batteries such as polyolefins, polyethyleneterephthalates, polybutyleneterephthalates, polyacetals, polyamides, polycarbonates, polyimides, polyether etherketones, polyethersulfones, polyphenylene oxides, polyphenylene sulfides, polyethylene naphthalene, and the like. In particular, the porous polymer substrate may be made of a polyolefin-based polymer. Examples of the polyolefin include, but are not limited to, polyethylene, polypropylene, polypentene, and the like, and one or more types may be included. The polyolefin-based porous separator, i.e., polymer substrate having a plurality of pores, is advantageous in terms of imparting a shutdown function at appropriate temperatures. Particularly, when polyethylene and polypropylene are both included as polyolefin, both the shutdown characteristic and physical properties such as mechanical strength can be improved.

When manufacturing the polyolefin polymer substrate, other polymer components or filler particles may be further mixed as needed in addition to the polyolefin-based polymer described above. The filler particles may serve as a pressure barrier so that the thickness, pore size, and porosity of the separator substrate are not excessively reduced by a high pressure applied in the lamination process described below. The filler particles may include organic filler particles or inorganic filler particles having a predetermined particle size. The composition of the filler particles is not limited if it exhibits a strength equal to or larger than the strength of the polyolefin resin.

The thickness of the porous polymer substrate may be in the range of from 5 µm and 30 µm but is not limited thereto. In addition, the average pore size of the porous polymer substrate, particularly polyolefin porous polymer substrate, may be in the range of from 20 to 80 nm and more specifically the range of from 40 to 80 nm, but is not limited thereto.

The average pore size of the porous polymer substrate may be calculated from the pore size distribution measured using a capillary flow porometer method. For example, first, the separator to be measured is wetted with a wetting agent such as a Galwick solution, and then the air pressure applied to one side of the substrate is gradually increased. When the applied air pressure is greater than the capillary attraction of the wetting agent being present in the pores, the wetting agent in the pores is pushed out. The pore sizes and pore size distribution are determined from the air pressure and flow rate at the moment at which the wetting agent is pushed out. In this way, the average pore size can be determined.

The porous polyolefin polymer substrates most used as porous polymer substrates may be manufactured by a method described below, but the manufacturing method is not limited thereto.

In one embodiment of the present disclosure, the porous polymer substrate may be manufactured by a dry method in which a polyolefin polymer is melted and extruded to be a sheet, and the sheet is stretched to generate micro cracks between lamellas, which are crystal parts of the polymer, so that micro pores are formed. In addition, the porous polymer substrate may be manufactured by a wet method in which a polyolefin polymer and a diluent are kneaded at a high temperature to form a single phase, the single phase is phase-separated into the polymer material and the diluent during a cooling process, and then the diluent is extracted to form pores.

When filler is added, the size of filler particles may be in the range of from 0.001 µm to less than 100 µm. Preferably, the filler particles have a size of 0.01 µm to 0.1 µm, and the filler particle size may be adjusted to fall within the range depending on the target thickness after the separator substrate is laminated.

The polymer solution coated to the porous polymer substrate is prepared by dissolving a first polymer soluble to an electrolyte solubility in a solvent.

The term "first polymer soluble to an electrolyte" refers to a polymer that is dissolved in an electrolyte that is injected into a battery case encasing an electrode assembly to impregnate the electrode assembly. The first polymer is a polymer that is finally eluted by the electrolyte in a lithium secondary battery product.

As the solvent, any solvent that can dissolve the first polymer can be used. However, it is easy for the polymer solution to impregnant into the pores of the porous polymer substrate when a solvent having affinity with the polymer of the porous polymer substrate is used.

In this aspect, as the first polymer, any one type or a mixture of two more types selected from polyacrylonitrile (PAN), polylactic acid (PLA), polyacrylic acid (PAA), and the like may be used. However, examples of the first polymer are not limited thereto. As the solvent, one or more types selected from dimethyl carbonate, propylene carbonate, ethyl methyl carbonate, ethylene carbonate, and the like, which are carbonate-based solvents used as the main component of a non-aqueous electrolyte, may be used. However, the examples of the solvent are not limited thereto.

It is preferable that the concentration of the first polymer in the polymer solution is determined to be sufficient to close the pores by occupying the pores of a superficial region of the porous polymer substrate after drying and to be sufficient to impart compression resistance. In this aspect, the concentration of the first polymer in the polymer solution may be in the range of from 5% to 70% by weight, but this is not limited thereto.

A conventional coating method is used for coating the polymer solution to the porous polymer substrate and impregnating the pores of the porous polymer substrate with the polymer solution. Particularly, dip coating, die coating, roll coating, comma coating, or a combination thereof may be used. The polymer solution may be coated only to one surface of the porous polymer substrate, and may be coated to both surfaces of the porous polymer substrate.

Depending on the coating of the polymer solution, the polymer solution may penetrate the surface of the porous polymer substrate, thereby being positioned on or in the pores of the superficial layer of the porous polymer substrate.

Next, Step S12 of coating and drying the slurry containing the second polymer non-soluble to the electrolyte, on the polymer solution, will be described.

The term "second polymer non-soluble to an electrolyte" refers to a polymer that is not dissolved in an electrolyte that is injected into a battery case encasing an electrode assembly to impregnate the electrode assembly. The second polymer is a polymer that is not eventually eluted by the electrolyte in a lithium secondary battery product. That is, since the second polymer non-soluble to an electrolyte is required to have a property that is it not eluted by the electrolyte, the second polymer should be interpreted in the sense that the second polymer refers to a polymer that does not dissolve in the electrolyte even though being swollen by the electrolyte.

In this sense, examples of the second polymer include vinylidenefluoride-hexafluoropropylene copolymers, vinylidenefluoride-chlorotrifluoroethylene copolymers, vinylidenefluoride-hexafluoropropylene-chlorotrifluoroethylene terpolymers, and cyanoethyl polyvinyl alcohols, and these materials may be used solely or in combination thereof. These second polymers do not dissolve even though they are swollen by a carbonate-based solvent used as the main component of a non-aqueous electrolyte.

The slurry containing the second polymer may be prepared as a first type of polymer solution in which the second polymer is dissolved in an organic solvent, a second type of slurry in which the second polymer is dispersed in an aqueous dispersion medium, a third type of slurry in which inorganic particles are added to the first type of slurry, or a fourth type of slurry in which inorganic particles are added to the second type of slurry.

The methods of preparing the third type of slurry and the fourth type of slurry will be described below, but the preparation methods are not limited thereto.

To prepare the third type of slurry, the second polymer is dissolved in an appropriate organic solvent to obtain a polymer solution. As the solvent, preferably, a material having a similar solubility index to the second polymer and a low boiling point is used. This is to facilitate uniform mixing and subsequent solvent removal. For example, not limitedly, the usable solvent may be acetone, tetrahydrofuran, methylene chloride, chloroform, dimethylformamide, N-methyl-2-pyrrolidone (NMP), cyclohexane, water, or any mixture thereof. Next, inorganic particles are added and dispersed in the prepared polymer solution. The content ratio of the inorganic particles and the second polymer may be in the range of from 50:50 to 99:1, and the content ratio may be adjusted depending on the thickness, pore size, and porosity of the coating layer to be formed.

The fourth type of slurry is a slurry made by dispersing inorganic particles and the second polymer particles in an aqueous dispersion medium. The aqueous dispersion medium is a hydrophilic liquid such as water, alcohol, and is a dispersion medium that does not dissolve the inorganic particles and binder polymer particles. Since the polymer particles are not dissolved in the aqueous dispersion medium, the polymer particles remain as a particle phase when added to the slurry, and their shape is typically a spherical particle but is not limited thereto. As such, since the polymer particles remain as the particle phase, it is difficult for the polymer particles to impregnate into the pores of the porous polymer substrate, thereby contributing to the alleviation of the pore closing phenomenon of the polymer substrate.

The first and second polymers included in the third type of slurry and the fourth type of slurry interconnect and fix the inorganic particles when forming the coating layer, thereby imparting adhesive strength to the coating layer with respect to each of the polymer substrate and the electrode.

The inorganic particles used for the preparation of the third type of slurry and the fourth type of slurry are not particularly limited as long as they are electrochemically stable. That is, the inorganic particles used in the present disclosure are not particularly limited unless they undergo an oxidation and/or reduction reaction within an operating voltage range (for example, 0 to 5 V for the case of Li/Li⁺) of a battery.

The inorganic particles are high-k inorganic particles having a high dielectric constant of 1 or greater, preferably 10 or greater, inorganic particles having piezoelectricity, inorganic particles having a lithium ion-transporting ability, and the like may be used.

Examples of the inorganic particles include SrTiO₃, SnO₂, CeO₂, MgO, NiO, CaO, ZnO, ZrO₂, Y₂O₃, Al₂O₃, AlOOH, Al (OH)₃, TiO₂, and SiC. A mixture of one or more types of high-k inorganic particles may be used, but the inorganic particles are not limited thereto.

The inorganic particles having piezoelectricity refer to materials that serve as insulators under atmospheric pressure but serve as electrical conductors under a predetermined pressure due to the internal structural changes thereof. The inorganic particles with piezoelectricity have a high dielectric constant value of 100 or more. In addition, when a certain pressure is applied to such inorganic particles and thus the inorganic particles are stretched or compressed, charges are generated. Since one side is positively charged and the other side is negatively charged, a potential difference is generated between the two sides. In the case of using such inorganic particles with piezoelectricity, when an internal short circuit occurs between both electrodes due to an external impact such as local crush or nail stabbing, a potential difference occurs within the particles due to the piezoelectricity of the inorganic particles, whereby electron movement occurs between the two electrodes, that is, a minute current flow is made, resulting in a gentle voltage drop of the battery. That is, the safety of the battery is improved. Examples of inorganic particles having piezoelectricity include BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), hafnium oxide (HfO₂), or mixtures thereof, but the present disclosure is not limited thereto.

The inorganic particles having a lithium ion-transporting ability refer to inorganic particles that contain element lithium but does not store lithium ions. These inorganic particles have a function of transporting lithium ions. The inorganic particles having a lithium ion transportation ability can transport and move lithium ions due to a kind of defect existing inside the particle structure. Therefore, these inorganic particles improve lithium ion conductivity in the battery, thereby improving the battery performance. Examples of the inorganic particles having a lithium ion-transporting ability include: (LiAlTiP)ₓO_{y}-based glasses (x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), and 14Li₂O-9Al₂O₃-38TiO₂-39P₂O₅, etc.; lithium germanium thiophosphates (LiₓGe_{y}P_{z}S_{w}, 0<x<4, 0<y<1, 0<z<1, 0<w<5) such as Li_{3.25}Ge_{0.25}P_{0.75}S₄, etc.; lithium nitrides (LiₓN_{y}, 0<x<y<2) such as Li₃N, etc.; SiS₂-based glasses (LiₓSi_{y}S_{z}, 0<x<3, 0<2, 0<z<4) such as Li₃PO₄-Li₂S-SiS₂, etc.; P₂S₅-based glasses (LiₓP_{y}S_{z}, 0<x<3, 0<y<3, 0<z<7) such as LiI-Li₂S-P₂S₅, etc.; and mixtures thereof. However, the present disclosure is not limited thereto.

The size of the inorganic particles is not particularly limited, but is preferably in the range of from 0.001 µm to 10 µm to facilitate the formation of a uniform-thickness coating layer and an appropriate porosity.

A dispersant or the like may be added to the first to fourth types of slurry as needed.

A method of coating a slurry containing the second polymer non-soluble to an electrolyte over the coated polymer solution are not particularly limited, and nay conventional methods known in the art may be used. For example, various methods such as dip coating, die coating, roll coating, comma coating, or a combination thereof may be used.

In the process of drying the coated slurry, temperature and time are appropriately set to minimize the occurrence of surface defects of the coating layer. The drying may be performed in appropriate conditions using a drying auxiliary device such as a drying oven or hot air.

According to the present disclosure, the polymer solution coated according to Step S11 may be dried before the slurry coating according to Step S12. The drying may be performed in appropriate conditions using a drying auxiliary device such as a drying oven or hot air.

According to one aspect of the present disclosure, there is provided a separator for a lithium secondary battery, the separator including: a porous polymer substrate having a plurality of closed pores and including a first polymer soluble to an electrolyte; and an outer coating layer including a second polymer non-soluble to the electrolyte and disposed on at least one surface of the porous polymer substrate. For example, the rate of impregnation of the first polymer soluble to the electrolyte into the porous polymer substrate may be adjusted depending on the coating method and conditions.

According to another aspect of the present invention, there is provided a separator for a lithium secondary battery, the separator including:
a porous polymer substrate having a plurality of pores;
a first polymer coating layer disposed in the pores such that the pores of the porous polymer substrate are closed, the first polymer being soluble to an electrolyte; and
an outer coating layer disposed on an upper surface of the first polymer coating layer and including a second polymer non-soluble to the electrolyte.

The details of the first polymer, the second polymer, and the outer coating layer are the same as described above.

The lithium secondary battery separator structured as described above is used to manufacture a lithium secondary battery by a method described below.

First, an electrode assembly is prepared by the lamination of the separator, an anode, and a cathode (Step S21).

That is, the electrode assembly is manufactured by a lamination process in which the separator prepared by the method described above is placed between the anode and the cathode, and heat and pressure are applied to the stacked structure for the bonding between each of the components in the stacked structure. In one embodiment of the present disclosure, the lamination process can be performed using a roll pressing device including a pair of pressing rollers. That is, the anode, the separator, and the cathode are sequentially stacked, and the stacked structure is inserted between the pressing rollers to achieve interlayer bonding. In this case, the lamination process may be performed by hot pressing.

The cathode includes a cathode current collector and a cathode active material layer provided on at least one surface of the cathode current collector. The cathode active material layer includes a cathode active material, a conductive material, and a binder resin. The cathode active material may include one compound or a mixture of two or more compounds selected from: layered compounds or compounds with one or more transition metals, such as lithium nickel oxide (LiNiO₂), lithium manganese composite oxide (LiMn₂O₄, LiMnO₂), lithium cobalt oxide (LiCoO₂), and lithium nickel oxide (LiNiO₂); lithium manganese oxides represented by a formula of Li₁₊ₓMn₂₋ₓO₄ (here, x is in the range of 0 to 0.33), such as LiMnO₃, LiMn₂O₃, and LiMnO₂; lithium copper oxide (Li₂CuO₂); vanadium oxides such as LiV₃O₈, LiV₃O₄, V₂O₅, and Cu₂V₂O₇; Ni-site lithium nickel oxides represented by a formula of LiNi₁₋ₓMₓO₂ (here, M = Co, Mn, Al, Cu, Fe, Mg, B or Ga, x = 0.01 to 0.3); lithium manganese composite oxides represented by a formula of LiMn₂₋ₓMₓO₂ (M = Co, Ni, Fe, Cr, Zn, or Ta, x = 0.01 to 0.1) or by a formula of Li₂Mn₃MO₈ (M = Fe, Co, Ni, Cu, or Zn); LiMn₂O₄ in which Li is partially substituted with alkali earth metal ions; disulfide compounds; and Fe₂(MoO₄)₃.

The anode includes an anode current collector and an anode active material layer provided on at least one surface of the anode current collector. The anode active material layer includes an anode active material, a conductive material, and a binder resin. The anode includes, as the anode active material, one material or a mixture of two more materials selected from: carbon such as lithium metal oxide, non-graphitizable carbon, and graphitic carbon; metal composite oxides such as LixFe₂O₃(0≤x≤1), LiₓWO₂(0≤x≤1), SnₓMe₂₋ₓMe'_{y}O_{z} (Me: Mn, Fe, Pb, or Ge; Me': Al, B, P, Si, elements of groups 1, 2, and 3 of the periodic table, or halogen; 0<x≤1; 1≤y≤3; and 1≤z≤8); lithium metal; lithium alloy; silicon-based alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni-based materials; and titanium oxides.

The conductive material may be one type or a mixture of two or more types selected from the group consisting of graphite, carbon black, carbon or metal fiber, metal powders, conductive whiskers, conductive metal oxides, activated carbon, and polyphenylene derivatives. More specifically, the conductive material may be one type or a mixture of two or more types selected from the group consisting of natural graphite, synthetic graphite, super-p, acetylene black, ketjen black, channel black, furnace black, lamp black, summer black, denka black, aluminum powder, nickel powder, zinc oxide, potassium titanium, and titanium oxide.

The material of the current collector is not particularly limited as long as the material has high conductivity and does not cause chemical change in the battery. For example, stainless steel, aluminum, nickel, titanium, or fired carbon may be used. Alternatively, in the current collector, stainless steel or aluminum is used as a base material, and the surface of the base material may be treated with carbon, nickel, titanium, silver, or the like.

As the binder resin, a polymer commonly used for electrodes in the art may be used. Non-limiting examples of such binder resins include, but are not limited to, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, and the like.

The electrode assembly produced through the lamination process is loaded in a battery case, an electrolyte is injected into the battery case so that the first polymer is dissolved and thus the closed pores of the porous polymer substrate are opened(Step S22).

The electrolyte is a salt having the structure "A⁺B⁻" wherein A⁺ is an alkali metal cation such as Li⁺, Na⁺, K⁺, or a combination thereof, and B⁻ is an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof. The salt may be dissolved or dissociated in an organic solvent composed of one type or a mixture of two or more types selected from propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, tetrahydrofuran-2-methylpyrrolane (NMP), ethylcarbonate (EMC), and gamma butyrolactone (γ-butyrolactone), but the electrolyte is not limited thereto. As an electrolyte, a non-aqueous electrolyte that is the form in which a lithium salt is dissolved in a carbonate-based organic solvent may be particularly used.

When the electrode assembly is impregnated with the injected electrolyte, the first polymer being present on the surface of the separator or in the pores of the separator is dissolved. Due to this, the closed pores of the porous polymer substrate are opened. For the first polymer to be easily dissolve, the electrolyte may be prepared in a properly heated state, or the battery case injected with the electrolyte is left in an appropriately high temperature environment.

The present disclosure provides a battery module including a battery including the electrode assembly as a unit cell, a battery pack including the battery module, and a device including the battery pack as a power source. Specific examples of the device include: power tools driven by a battery-powered motor; electric vehicles including an electric vehicle (EV), a hybrid electric vehicle (HEV), and a plug-in hybrid electric vehicle (PHEV); and electric two-wheeled vehicles including an electric bike (E-bike), an electric scooter (E-scooter), an electric golf cart, a power storage system, etc., but the examples are not limited thereto.

Hereinafter, the present disclosure will be described in detail with reference to examples. The examples of the present disclosure described below may be modified into various forms, so that the scope of the present disclosure should not be construed as being limited to the examples described below. The examples are provided to enable those skilled in the art to understand the present disclosure more easily.

### [Example 1]

B09PJ1 (thickness 9 µm, porosity 44%, basis weight 5.0 g/m², and Gurley value 70 sec/100 cc), which is a separator fabric manufactured by Toray, was used as a porous polymer substrate.

On the other hand, PAN (Mw 150,000 g/mol) was used as a first polymer soluble to an electrolyte, and the first polymer was completely dissolved in dimethyl carbonate (DMC), which is a solvent, at a concentration of 40% by weight to prepare a polymer solution.

The prepared polymer solution was coated to the porous polyethylene polymer base dipped coated, by dip coating, on a porous polyethylene polymer fabric for 10 seconds and was dried at 65°C to form a polymer coating layer (thickness: 0.2 µm).

PVDF-HFP copolymer (substitution rate of HFP-derived repeating unit: 8% by weight; Mw = 500,000 g/mol), which is a second polymer non-soluble to the electrolyte, is dissolved in acetone, which is a solvent, to form a polymer solution. Next, Al₂O₃ powder having an average particle size of about 400 nm was added (15% by weight of total solids) to the polymer solution such that the content ratio of the second polymer non-soluble to the electrolyte and inorganic particles was 20:80, and well mixed to form a slurry.

The prepared slurry was coated to a polymer coating layer by roll coating and then dried at 45°C to form an outer coating layer (thickness: 6.5 µm).

### Comparative Example 1

A separator was prepared in the same manner as in Example 1 except that the separator fabric is not coated with the first polymer solution.

### [Reduction ratio of thickness after hot pressing]

Each of the separators of Example 1 and Comparative Example 1 was pressed with a hot press to modify the thickness, and then the thickness was measured. The thickness reduction ratio was calculated using the formula shown below. The hot pressing was performed under conditions of 70°C, 5.2 MPa, and 10 sec. The thickness was measured using a thickness meter (Mitutoyo, VL-50S) .

Thickness reduction ratio (%) of separator = {(separator thickness before hot press - separator thickness after hot press)/separator thickness before hot press} * 100

### [Weight after peeling of coating layer]

Scotch magic tape 810 manufactured by 3M company was used to peel each of the separator coating layers of the example and the comparative example. After removing the outer coating layer composed of the second polymer non-soluble to the electrolyte in a manner to attach and peel the adhesive tape twice on each side of each of the separators, the weight of each separator was measured.

### [Weight ratio of impregnated polymer to separator fabric]

The ratio of the weight of the impregnated first polymer to the weight of the separator fabric was calculated using the formula shown below. Weight ratio (%) of impregnated polymer to fabric = {(weight of separator after detachment of coating layer - weight of separator fabric)/weight of separator fabric} * 100

### [Measurement of capacity retention rate after 25°C, 1C/1C, 500 cycles]

### 1) Preparation of cathode

A cathode active material (LiNi_{0.8}Mn_{0.1}Co_{0.1}O₂), a conductive material (carbon black), a dispersant, and a binder resin (mixture of PVDF-HFP and PVDF) were mixed with water in a weight ratio of 97.5:0.7:0.14:1.66 to obtain a cathode active material slurry in which the concentration of the components except for water was 50% by weight. Next, the slurry was coated to the surface of a thin aluminum film (thickness = 10 µm) and dried to prepare a cathode having a cathode active material layer (thickness = 120 µm) .

### 2) Preparation of anode

Graphite (natural graphite and artificial graphite), a conductive material (carbon black), a dispersant, and a binder resin (mixture of PVDF-HFP and PVDF) were mixed with water in a weight ratio of 97.5:0.7:0.14:1.66 to obtain an anode active material slurry in which the concentration of the remaining components except for water was 50% by weight. Next, the slurry was coated to a surface of a thin copper film (10µm thickness) and dried to produce an anode having an anode active material layer (120µm thickness).

### 3) Lamination process

Electrode assemblies were obtained by interposing one of the separators of the examples and the comparative examples between the cathode and the anode and by performing a lamination process. The lamination process was performed at 70°C at 5.2 MPa for 10 seconds using a hot press.

### 4) Injection of electrolyte

The electrode assembly obtained through the lamination process was inserted into a pouch-type exterior member, and an electrolyte was injected into the exterior member to obtain a lithium secondary battery, in which the electrolyte has a form in which 1M LiPF₆ was dissolved in a solvent in which ethylene carbonate (EC) and ethyl methyl carbonate (EMC) were mixed in a volume ratio of 30:70.

For the batteries prepared by the method described above, the charging/discharging cycle was repeated at a rate of 1C at 25°C in a voltage range 2.5V to 4.25 V, and the discharge capacity ratio after 500 cycles was calculated.

**[Table 1]**

| | Example 1 | Comparative Example 1 |
|---|---|---|
| Total thickness (prepress, µm) | 15.7 | 15.0 |
| Total thickness (postpress, µm) | 15.4 | 13.1 |
| Ratio (%) of thickness reduction after hot press | 2 | 12.7 |
| Weight after peeling of coating layer (g/m ²) | 7.6 | 5.1 |
| Weight ratio (%) of impregnated first polymer to separator fabric | 52 | 2 |
| 25°C, 1C/1C, capacity retention rate (%) after 500 cycles | 94 | 65 |

## Claims

1. A method of manufacturing a separator for a lithium secondary battery, the method comprising:
(S11) coating a polymer solution prepared by dissolving a first polymer soluble to an electrolyte in a solvent to at least one surface of a porous polymer substrate having a plurality of pores, thereby impregnating the pores of the porous polymer substrate with the polymer solution; and
(S12) coating and drying a slurry containing a second polymer non-soluble to the electrolyte, on the coated polymer solution.

2. The method of claim 1, wherein the method further comprises drying the coated polymer solution applied according to S11, before the coating of the slurry according to S12.

3. The method of claim 1 or 2, wherein the first polymer comprises one or more types selected from the group consisting of polyacrylonitrile (PAN), polylactic acid (PLA), and polyacrylic acid (PAA).

4. The method of claim 1 or 2, wherein the first polymer in the polymer solution has a concentration of 5% to 70% by weight.

5. The method of claim 1 or 2, wherein the second polymer comprises one or more types selected from the group consisting of a PVDF-HFP copolymer, a PVDF-CTFE copolymer, a PVDF-HFP-CTFE terpolymer, and a cyanoethyl polyvinyl alcohol.

6. The method of claim 1 or 2, wherein the slurry further comprises inorganic particles.

7. A separator for a lithium secondary battery, the separator comprising:
a porous polymer substrate having a plurality of closed pores and comprising a first polymer soluble to an electrolyte; and
an outer coating layer disposed on at least one surface of the porous polymer substrate and comprising a second polymer non-soluble to the electrolyte.

8. The separator of claim 7, further comprising a coating layer disposed between the porous polymer substrate and the outer coating layer,
wherein the coating layer comprises the first polymer.

9. The separator of claim 7, wherein the first polymer comprises one or more types selected from the group consisting of polyacrylonitrile (PAN), polylactic acid (PLA), and polyacrylic acid (PAA).

10. The separator of claim 7, wherein the second polymer comprises one or more types selected from the group consisting of a PVDF-HFP copolymer, a PVDF-CTFE copolymer, a PVDF-HFP-CTFE terpolymer, and a cyanoethyl polyvinyl alcohol.

11. The separator of claim 7, wherein the outer coating layer further comprises inorganic particles.

12. The separator of claim 11, wherein the content ratio of the inorganic particles and the second polymer in the outer coating layer is 50:50 to 99:1.

13. A method of manufacturing a lithium secondary battery, the method comprising:
(S21) preparing an electrode assembly by laminating the separator of any one of claims 7 to 12 with a cathode and an anode; and
(S22) opening the closed pores of the porous polymer substrate by dissolving the first polymer, by injecting an electrolyte after loading the laminated electrode assembly into a battery case.
